# EUROPÄISCHE PATENTSCHRIFT

(11) **EP 3 703 893 B1**
(45) Veröffentlichungstag und Bekanntmachung des Hinweises auf die Patenterteilung: **28.09.2022**
(21) Anmeldenummer: 18826016.0
(22) Anmeldetag: 19.12.2018
(51) Int. Cl.: B23C 5/08, B23C 5/10, B27G 13/00

(54) **FRÄSWERKZEUG-HALTER UND FRÄSWERKZEUG**
MILLING TOOL HOLDER AND MILLING TOOL
PORTE-OUTIL DE FRAISAGE ET OUTIL DE FRAISAGE

(30) Priorität: 21.12.2017 DE 102017131001
(43) Veröffentlichungstag der Anmeldung: 09.09.2020
(73) Patentinhaber: Hartmetall-Werkzeugfabrik Paul Horn GmbH, 72072 Tübingen (DE)
(72) Erfinder: STARK, Christian, 72108 Rottenburg (DE)
(74) Vertreter: Witte, Weller & Partner Patentanwälte mbB
(86) Internationale Anmeldenummer: PCT/EP2018/085966
(87) Internationale Veröffentlichungsnummer: WO 2019/121998

(56) Entgegenhaltungen:
- DE-A1- 2 503 830
- US-A- 4 936 717
- US-A1- 2006 086 424

## Beschreibung

Die vorliegende Erfindung betrifft einen Fräswerkzeug-Halter gemäß dem Oberbegriff des Patentanspruchs 1, sowie ein Fräswerkzeug mit dem Fräswerkzeug-Halter und mehreren daran angeordneten Schneidplatten. Das vorliegende Fräswerkzeug eignet sich insbesondere als Nut- und Trennfräser. Die vorliegende Erfindung ist jedoch nicht auf diese Art der Anwendung beschränkt. Grundsätzlich kommen auch andere Fräsanwendungen für das erfindungsgemäße Fräswerkzeug in Betracht.

Nut- und Trennfräser kommen zum Abtrennen von Werkstücken und zur Nutbildung in Werkstücken zum Einsatz. Die WO 2015/017874 A1 zeigt einen beispielhaften Nut- und Trennfräser. Die US 4 936 717 A zeigt ein Fräswerkzeug, das die Grundlage für den Oberbegriff des Anspruchs 1 bildet. Weitere Fräswerkzeuge sind aus der DE 25 03 830 A1 und der US 2006/086424 A1 zu entnehmen.

Mit ihrer meist im Wesentlichen scheibenförmigen Gestalt bilden Nut- und Trennfräser eine Untergruppe der Scheibenfräser. Der im Wesentlichen scheibenförmige Grundkörper ist meist rotationssymmetrisch zu einer Längsachse. Am Außenumfang des Grundkörpers ist eine Vielzahl von Schneidplatten zum Zerspanen des zu bearbeitenden Werkstücks angeordnet. Die Schneidplatten stehen dabei in axialer Richtung beidseitig von dem scheibenförmigen Grundkörper hervor. Der Grundkörper selbst ist häufig aus einem Werkzeugstahl gefertigt, wohingegen die Schneidplatten meist aus Hartmetall gefertigt sind. Je nach Art des Fräswerkzeugs sind die Schneidplatten durch Löten, Schweißen, Klemmen oder Verschrauben an dem Grundkörper entweder dauerhaft oder lösbar befestigt. Eine lösbare Befestigung mittels Klemmen oder Verschrauben ermöglicht ein einfaches Auswechseln der Schneidplatten, wenn diese verschlissen sind, wohingegen angelötete oder angeschweißte Schneidplatten bei Verschleiß nachgeschliffen werden müssen.

Je nach Art der Anwendung und des zu bearbeitenden Werkstücks kommen Nut- und Trennfräser unterschiedlichster Größe zum Einsatz. So müssen für die Herstellung mehrerer, unterschiedlich großer Nuten eine Vielzahl von Nut- und Trennfräsern unterschiedlichster Größe bereitgestellt werden. Dies ist für Fräsmaschinenanwender nicht nur kostspielig, sondern erfordert auch einen erhöhten Lageraufwand.

Vor diesem Hintergrund ist es eine Aufgabe der vorliegenden Erfindung, ein Fräswerkzeug bereitzustellen, welches sich variabel auf verschiedene Fräsbreiten einstellen lässt und dabei dennoch den enorm hohen Festigkeits-, Stabilitäts- und Präzisionsanforderungen genügt.

Gemäß einem ersten Aspekt der vorliegenden Erfindung wird diese Aufgabe durch einen Fräswerkzeug-Halter gemäß Anspruch 1 gelöst, welcher folgende Merkmale aufweist:
- ein erstes Halterteil mit einer ersten Schneidplatten-Aufnahme zur Aufnahme einer ersten Schneidplatte und mit einer zweiten Schneidplatten-Aufnahme zur Aufnahme einer zweiten Schneidplatte;
- ein zweites Halterteil, welches, zur Einstellung einer Fräsbreite, gegenüber dem ersten Halterteil entlang einer Längsachse variabel positionierbar ist, wobei das zweite Halterteil einer dritte Schneidplatten-Aufnahme zur Aufnahme einer dritten Schneidplatte sowie eine vierte Schneidplatten-Aufnahme zur Aufnahme einer vierten Schneidplatte aufweist;
- eine Arretierung zum Feststellen des ersten und zweiten Halterteils auf die eingestellte Fräsbreite,
wobei das erste und das zweite Halterteil in montiertem Zustand derart zueinander positioniert sind, dass die dritte Schneidplatten-Aufnahme in Umfangsrichtung zwischen der ersten Schneidplatten-Aufnahme und der zweiten Schneidplatten-Aufnahme angeordnet ist, und dass die zweite Schneidplatten-Aufnahme in Umfangsrichtung zwischen der dritten Schneidplatten-Aufnahme und der vierten Schneidplatten-Aufnahme angeordnet ist;
wobei der Fräswerkzeug-Halter ferner ein Distanzelement aufweist, welches der Einstellung der Fräsbreite dient und zwischen dem ersten und dem zweiten Halterteil angeordnet ist, wobei das erste Halterteil zur Zentrierung des Distanzelementes eine symmetrisch zur Längsachse verlaufende erste Zylinderfläche aufweist, und wobei das zweite Halterteil zur Zentrierung des Distanzelementes eine symmetrisch zur Längsachse verlaufende zweite Zylinderfläche aufweist.

Gemäß einem zweiten Aspekt der vorliegenden Erfindung wird die oben genannte Aufgabe durch ein Fräswerkzeug gelöst, welches den erfindungsgemäßen Fräswerkzeug-Halter sowie eine erste, eine zweite, eine dritte und eine vierte Schneidplatte aufweist, die in den entsprechenden Schneidplatten-Aufnahmen des Fräswerkzeug-Halters angeordnet sind.

Der erfindungsgemäße Fräswerkzeug-Halter zeichnet sich also durch zwei Halterteile aus, welche gegenüber einander entlang der Längsachse variabel positionierbar sind, um die Fräsbreite auf eine gewünschte Größe einstellen zu können. Sobald der Anwender die beiden Halterteile relativ zueinander positioniert hat und die gewünschte Fräsbreite eingestellt ist, lassen sich die beiden Halterteile mit Hilfe einer Arretierung zueinander feststellen.

Unter einer Arretierung wird vorliegend jede Art von mechanischer Vorrichtung verstanden, mittels derer zwei oder mehr zueinander bewegliche Teile sich feststellen lassen. Eine solche Arretierung kann jegliche Art von Rast-, Schraub-, Klemm-, Bolzen-oder Spannelement aufweisen. Die Arretierung dient im vorliegenden Fall dazu, eine unabsichtliche Veränderung der eingestellten Fräsbreite während des Einsatzes des Fräswerkzeugs zu verhindern.

Ein weiterer Vorteil des erfindungsgemäßen Fräswerkzeug-Halters besteht in der Art und Weise, wie die beiden Halterteile in montiertem Zustand, also z.B. bei festgestellter Arretierung, zueinander positioniert sind. Die beiden Halterteile greifen nämlich ähnlich wie eine Art Verzahnung ineinander. Anders ausgedrückt, könnte man auch sagen, dass die beiden Halterteile ineinander verschachtelt sind. In Umfangsrichtung des Fräswerkzeug-Halters betrachtet, also um die Längsachse des Fräswerkzeug-Halters herum umlaufend betrachtet, sind die Schneidplatten-Aufnahmen der beiden Halterteile jeweils abwechselnd angeordnet. Zwischen zwei Schneidplatten-Aufnahmen, welche an dem ersten Halterteil angeordnet sind, ist jeweils eine Schneidplatten-Aufnahme angeordnet, welche an dem zweiten Halterteil angeordnet ist. Umgekehrt ist auch zwischen zwei Schneidplatten-Aufnahmen, welche an dem zweiten Halterteil angeordnet sind, jeweils eine Schneidplatten-Aufnahme angeordnet, welche an dem ersten Halterteil angeordnet ist. Das erste und das zweite Halterteil kontaktieren einander daher entlang des Umfangs an mehreren, in Umfangsrichtung voneinander beabstandeten Drehmomentmitnahme-Stellen. Dies führt zu einer optimalen Drehmomentübertragung zwischen den beiden Halterteilen.

Auf diese Weise ist trotz der verstellbaren Fräsbreite eine extrem hohe mechanische Stabilität des Fräswerkzeug-Halters gewährleistet. Das erfindungsgemäße Fräswerkzeug unterscheidet sich daher in puncto Präzision, Stabilität und Festigkeit nicht von Fräswerkzeugen gleicher Art, deren Fräsbreite fix, also nicht variabel einstellbar ist.

Die oben genannte Aufgabe ist daher vollständig gelöst.

Es sei darauf hingewiesen, dass bezüglich des erfindungsgemäßen Fräswerkzeug-Halters und des erfindungsgemäßen Fräswerkzeugs jeweils von vier Schneidplatten-Aufnahmen bzw. vier Schneidplatten die Rede ist. Zum einen sei diesbezüglich erwähnt, dass dies lediglich die Mindestanzahl von Schneidplatten-Aufnahmen und Schneidplatten ist. Selbstverständlich kann der erfindungsgemäße Fräswerkzeug-Halter je nach Anwendung und Wunsch auch mehr Schneidplatten-Aufnahmen aufweisen. Zum anderen sei diesbezüglich erwähnt, dass die Schneidplatten, wenngleich bevorzugt, nicht zwangsläufig lösbar am Fräswerkzeug-Halter befestigt sein müssen, sondern an diesem auch dauerhaft (beispielsweise durch Löten oder Schweißen) befestigt sein können oder mit diesem gar integral verbunden sein können. Die Schneidplatten können grundsätzlich auch aus dem gleichen Werkstoff wie der Fräswerkzeug-Halter hergestellt sein. Grundsätzlich ist es jedoch bevorzugt, dass die Schneidplatten aus Hartmetall und der Fräswerkzeug-Halter aus Stahl hergestellt sind.

Gemäß einer Ausgestaltung der vorliegenden Erfindung weist das erste Halterteil einen Anschlussflansch zur Einspannung des Fräswerkzeugs in einer Werkzeugaufnahmen einer Werkzeugmaschine auf, wohingegen das zweite Halterteil im Wesentlichen scheibenförmig ausgestaltet ist.

Das zweite Halterteil ist gemäß dieser Ausgestaltung also als eine Art Scheibe auf das erste Halterteil aufgesetzt. Die Verbindung der beiden Halterteile miteinander bzw. die Fixierung der beiden Halterteile relativ zueinander erfolgt, wie bereits erwähnt, über die Arretierung, welche vorzugsweise eine Spannschraube aufweist.

Erfindungsgemäß weist der Fräswerkzeug-Halter ein Distanzelement auf, welches der Einstellung der Fräsbreite dient und zwischen dem ersten und dem zweiten Halterteil angeordnet ist.

Dieses Distanzelement dient nicht nur zur Einstellung des Abstandes zwischen den beiden Halterteilen, es übernimmt auch die Funktion der axialen Kraftübertragung (entlang der Längsachse) zwischen dem ersten und dem zweiten Halterteil.

Gemäß einer bevorzugten Ausgestaltung ist das Distanzelement als eine Hülse ausgestaltet. Diese Hülse wird vorzugsweise in dem ersten Halterteil angeordnet und mit Hilfe der Arretierung mit dem zweiten Halterteil verspannt. Zur Einstellung der Fräsbreite lässt sich das Distanzelement gegenüber dem ersten Halterteil an unterschiedlichen, entlang der Längsachse verteilten Positionen anordnen.

Gemäß einer bevorzugten Ausgestaltung erfolgt die Positionierung des Distanzelements relativ zu dem ersten Halterteil vorzugsweise über eine Schraubverbindung zwischen beiden Bauteilen. In dieser Ausgestaltung weist das Distanzelement ein erstes Gewinde auf, welches mit einem im ersten Halterteil angeordneten zweiten Gewinde korrespondiert, wobei das Zusammenspiel des ersten und des zweiten Gewindes der Einstellung der Fräsbreite dient.

Die Einstellung der Fräsbreite erfolgt in dieser Ausgestaltung also dadurch, dass das Distanzelement mehr oder weniger weit in das erste Halterteil eingeschraubt wird. Je weiter das Distanzelement in das erste Halterteil eingeschraubt wird, desto geringer wird der Abstand zwischen dem ersten und dem zweiten Halterteil und dementsprechend geringer wird die eingestellte Fräsbreite. Je weniger das Distanzelement in das erste Halterteil eingeschraubt wird, desto größer ist der Abstand zwischen den beiden Halterteilen und dementsprechend größer ist die Fräsbreite. Dies ermöglicht eine stufenlose Einstellung der Fräsbreite.

Gemäß einer weiteren Ausgestaltung kontaktiert das Distanzelement das zweite Halterteil entlang einer kreisringförmigen Anlagefläche.

Vorzugsweise ist diese kreisringförmige Anlagefläche orthogonal zu der Längsachse des Fräswerkzeug-Halters ausgerichtet. Die kreisringförmige Anlagefläche dient als Planauflage für die axiale Auflage des zweiten Halterteils auf dem Distanzelement. Die kreisringförmige Anlagefläche bietet insbesondere den Vorteil, dass hierdurch Taumelfehler minimiert werden, welche bei einem solchen mehrteiligen Aufbau des Fräswerkzeugs ansonsten bei ungleichmäßiger axialer Kräfteeinwirkung entstehen könnten.

Erfindungsgemäß weist das erste Halterteil zur Zentrierung des Distanzelementes eine symmetrisch zur Längsachse des Fräswerkzeug-Halters verlaufende erste Zylinderfläche auf. Ebenso weist erfindungsgemäß auch das zweite Halterteil zur Zentrierung des Distanzelementes eine symmetrisch zur Längsachse des Fräswerkzeug-Halters verlaufende zweite Zylinderfläche auf. Die beiden Zylinderflächen verlaufen vorzugsweise koaxial zueinander, sind aber entlang der Längsachse zueinander versetzt.

An dem Distanzelement sind ebenfalls zwei korrespondierende Zylinderflächen angeordnet, welche mit den an den beiden Halterteilen angeordneten Zylinderflächen (erste und zweite Zylinderfläche) korrespondieren. Vorzugsweise ist zwischen den Zylinderflächen des Distanzelementes und den korrespondierenden Zylinderflächen der beiden Halterteile eine Spielpassung vorgesehen. Diese Spielpassung muss so dimensioniert sein, dass die Toleranz für Rund- und Planlauf möglichst klein gehalten wird. Zu viel Spiel zwischen den Zylinderflächen könnte zu einem Verkippen der beiden Halterteile zueinander führen.

Gemäß einer weiteren Ausgestaltung weist die Arretierung eine Spannschraube auf, welche durch das Distanzelement hindurch in ein drittes Gewinde, welches in dem ersten Halterteil angeordnet ist, einschraubbar ist. Bevorzugt werden also sowohl das Distanzelement als auch die als Arretierung dienende Spannschraube in das erste Halterteil eingeschraubt. Besonders bevorzugt werden beide Schraubverbindungen durch Feingewinde realisiert. Die Realisierung des ersten und zweiten Gewindes als Feingewinde dient insbesondere der Möglichkeit der Feineinstellung der Fräsbreite. Die Realisierung des dritten Gewindes als Feingewinde hat dagegen den Vorteil, dass die Bauhöhe des dritten Gewindes insgesamt begrenzt wird.

In oben genannter Ausgestaltung, gemäß derer die Arretierung eine Spannschraube aufweist, ist es bevorzugt vorgesehen, dass die Spannschraube in eingeschraubtem Zustand das erste Halterteil und das zweite Halterteil, nicht jedoch das Distanzelement kontaktiert.

Die Spannschraube kontaktiert in dieser bevorzugten Ausgestaltung also lediglich die beiden Halterteile, aber nicht das Distanzelement. Ferner ist es bevorzugt, dass sich die beiden Halterteile lediglich zur Übertragung des Drehmoments in Umfangsrichtung kontaktieren, nicht jedoch zur Übertragung axialer und radialer Kräfte. Die Übertragung axialer und radialer Kräfte zwischen den beiden Halterteilen findet vorzugsweise ausschließlich über das Distanzelement sowie die Spannschraube statt.

Gemäß einer weiteren Ausgestaltung kontaktiert die Spannschraube das zweite Halterteil entlang einer konischen Fläche. Diese konische Fläche ist vorzugsweise symmetrisch zur Längsachse des Fräswerkzeug-Halters.

Die konische Fläche hat insbesondere den Vorteil, dass hierüber gleichzeitig Kräfte in axialer als auch in radialer Richtung zwischen Spannschraube und zweitem Halterteil übertragen werden können.

Ferner betrifft die Erfindung einen Werkzeugsatz, der den erfindungsgemäßen Fräswerkzeug-Halter und einen Verstelladapter zum Verstellen der Position des Distanzelements aufweist, wobei das Distanzelement einen zu dem Verstelladapter passenden, ersten Werkzeugeingriff aufweist, und wobei der Verstelladapter ferner einen zweiten Werkzeugeingriff aufweist.

Grundsätzlich ist es auch denkbar, das Distanzelement zur Einstellung der Fräsbreite von Hand zu verstellen. Der Verstelladapter ermöglicht jedoch eine einfachere Handhabung der Einstellung der Fräsbreite.

Zur Einstellung der Fräsbreite wird die Arretierung gelöst. Hierzu wird in oben beschriebenem Fall die Spannschraube gelöst. Das Distanzelement kann dann mit Hilfe der Schraubverbindung zwischen erstem und zweitem Gewinde neu positioniert werden. Hierzu kann der Verstelladapter von außen in den im Distanzelement vorgesehenen ersten Werkzeugeingriff eingeführt werden. Um den Verstelladapter dann zusammen mit dem Distanzelement gegenüber dem ersten und zweiten Halterteil zu verdrehen, wird ein Werkzeug verwendet, das in den zweiten Werkzeugeingriff am Verstelladapter eingreift. Bei beiden Werkzeugeingriffen handelt es sich vorzugsweise um einen Innen-Vielkant.

Die Drehmomentmitnahme zwischen dem ersten und dem zweiten Halterteil erfolgt, wie bereits erwähnt, vorzugsweise über mehrere entlang des Umfangs des Fräswerkzeug-Halters verteilt angeordnete Drehmomentmitnahme-Flächen. Gemäß einer bevorzugten Ausgestaltung ist es diesbezüglich vorgesehen, dass das erste und das zweite Halterteil einander entlang mehrerer, miteinander korrespondierender solcher Drehmomentmitnahme-Flächen kontaktieren, wobei die Drehmomentmitnahme-Flächen mit einer Radialrichtung, die orthogonal zu der Längsachse und der Umfangsrichtung verläuft, einen Winkel < 5° einschließen. Hierdurch wird eine sehr effiziente Drehmomentübertragung gewährleistet.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in den Zeichnungen dargestellt und wird in der nachfolgenden Beschreibung näher erläutert. Es zeigen:
- Fig. 1: eine perspektivische Ansicht eines Ausführungsbeispiels des erfindungsgemäßen Fräswerkzeugs;
- Fig. 2: eine Explosionsdarstellung des in Fig. 1 gezeigten Ausführungsbeispiels;
- Fig. 3: eine weitere perspektivische Ansicht des in Fig. 1 gezeigten Ausführungsbeispiels in einem ersten Zustand;
- Fig. 4: eine Schnittansicht des in Fig. 1 gezeigten Ausführungsbeispiels in dem ersten Zustand;
- Fig. 5: eine perspektivische Ansicht des in Fig. 1 gezeigten Ausführungsbeispiels in einem zweiten Zustand;
- Fig. 6: eine Schnittansicht des in Fig. 1 gezeigten Ausführungsbeispiels in dem zweiten Zustand;
- Fig. 7: eine perspektivische Ansicht des in Fig. 1 gezeigten Ausführungsbeispiels in einem dritten Zustand;
- Fig. 8: eine Schnittansicht des in Fig. 1 gezeigten Ausführungsbeispiels in dem dritten Zustand;
- Fig. 9: eine perspektivische Ansicht des in Fig. 1 gezeigten Ausführungsbeispiels in einem vierten Zustand; und
- Fig. 10: eine Schnittansicht des in Fig. 1 gezeigten Ausführungsbeispiels in dem vierten Zustand.

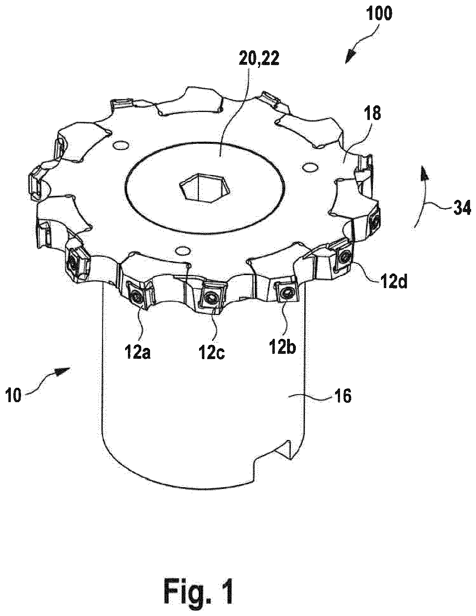

Die Fig. 1-10 zeigen ein Ausführungsbeispiel des erfindungsgemäßen Fräswerkzeugs in verschiedenen Ansichten und unterschiedlichen Zuständen. Die Veranschaulichung der unterschiedlichen Zustände dient der Erläuterung der Funktion des Fräswerkzeugs. Das Fräswerkzeug ist in den Fig. 1-10 jeweils gesamthaft mit der Bezugsziffer 100 bezeichnet.

Das Fräswerkzeug 100 weist einen Fräswerkzeug-Halter 10 sowie mehrere an dem Fräswerkzeug-Halter 10 angeordnete Schneidplatten 12 auf. In Fig. 1 sind vier dieser Schneidplatten exemplarisch mit den Bezugszeichen 12a-12d versehen. Rein zu Erläuterungszwecken werden diese Schneidplatten wie folgt durchnummeriert: Die Schneidplatte 12a wird als erste Schneidplatte bezeichnet, die Schneidplatte 12b wird als zweite Schneidplatte bezeichnet, die Schneidplatte 12c wird als dritte Schneidplatte bezeichnet und die Schneidplatte 12d wird als vierte Schneidplatte bezeichnet.

In dem vorliegend gezeigten Ausführungsbeispiel sind insgesamt vierzehn dieser Schneidplatten 12 am Fräswerkzeug-Halter angeordnet. Die für die Funktionsweise der vorliegenden Erfindung erforderliche Mindestanzahl an Schneidplatten 12 ist jedoch nur vier. Grundsätzlich kann das Fräswerkzeug 100 jedoch jede beliebige Anzahl von Schneidplatten 12 größer vier aufweisen. Vorzugsweise weist das erfindungsgemäße Fräswerkzeug 100 eine gerade Anzahl von Schneidplatten 12 auf.

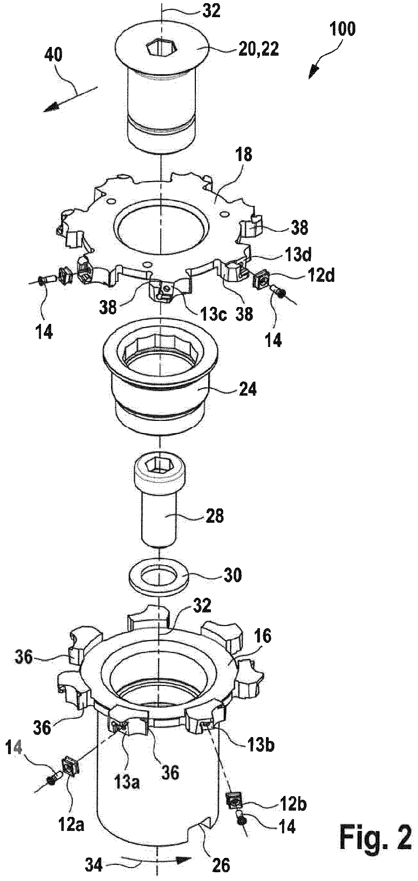

Die Schneidplatten 12 sind gemäß des vorliegenden Ausführungsbeispiels mit Hilfe von Befestigungsschrauben 14 am Fräswerkzeug-Halter 10 lösbar befestigt (siehe Fig. 2). Die Schneidplatten 12 sind in dafür vorgesehenen Schneidplatten-Aufnahmen 13 lösbar angeordnet, wobei in Fig. 2 wiederum exemplarisch nur vier dieser Schneidplatten-Aufnahmen 13a-13d mit Bezugszeichen versehen sind. Äquivalent zu der Benennung der Schneidplatten 12a-12d werden auch die Schneidplatten-Aufnahmen 13a-13d vorliegend wie folgt bezeichnet: Erste Schneidplatten-Aufnahme 13a, zweite Schneidplatten-Aufnahme 13b, dritte Schneidplatten-Aufnahme 13c und vierte Schneidplatten-Aufnahme 13d.

Es ist jedoch gleichermaßen denkbar, die Schneidplatten 12 auf andere Art und Weise, beispielsweise durch Klemmen, Löten oder Schweißen, lösbar oder dauerhaft am Fräswerkzeug-Halter 10 zu befestigen. Unabhängig von der Art der Befestigung werden die Schneidplatten 12 vorzugsweise aus Hartmetall, der Fräswerkzeug-Halter 10 dagegen vorzugsweise aus Stahl hergestellt.

Der Fräswerkzeug-Halter 10 ist mehrteilig aufgebaut. Erweist ein erstes Halterteil 16 sowie ein zweites Halterteil 18 auf. Die beiden Halterteile 16, 18 sind gegenüber einander beweglich. In montiertem Zustand ist dies natürlich nicht der Fall. Die beiden Halterteile 16, 18 lassen sich jedoch zur Einstellung der Fräsbreite in verschiedenen, vom Nutzer wählbaren Positionen zueinander positionieren. Mit Hilfe einer Arretierung 20, welche vorliegend eine Spannschraube 22 aufweist, lassen sich die beiden Halterteile 16, 18 in der gewünschten Position (entsprechend der eingestellten Fräsbreite) zueinander fixieren bzw. feststellen. Vorzugsweise lässt sich der Abstand zwischen den beiden Halterteilen 16, 18 stufenlos einstellen.

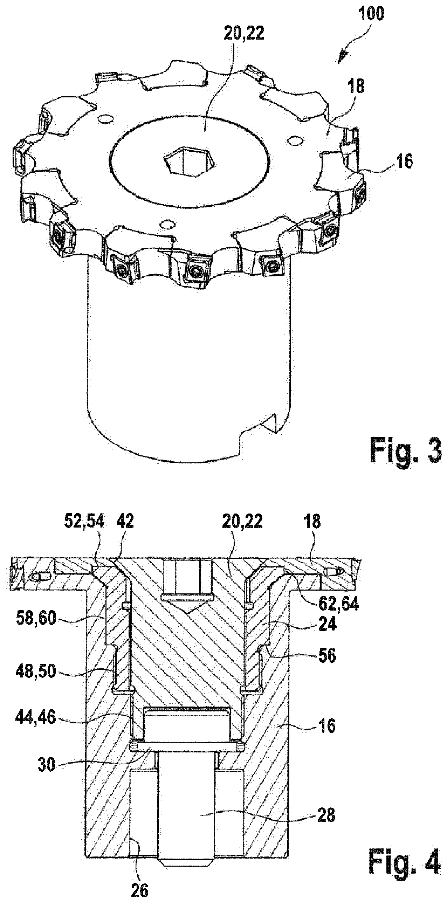

Zur Einstellung der Fräsbreite, also zum Variieren der Relativposition zwischen beiden Halterteilen 16, 18, dient in dem vorliegenden Ausführungsbeispiel ein Distanzelement 24. Dieses Distanzelement 24 ist in dem vorliegend gezeigten Ausführungsbeispiel als Hülse ausgestaltet, welche in das erste Halterteil 16 einschraubbar ist. Wie insbesondere in den Fig. 3-10 ersichtlich ist und nachfolgend im Detail erläutert wird, wird der Abstand zwischen dem ersten Halterteil 16 und dem zweiten Halterteil 18 verringert, je weiter das Distanzelement 24 in das erste Halterteil 16 eingeschraubt wird. Dies führt dann zu einer entsprechend geringeren Fräsbreite während des Einsatzes des Fräswerkzeugs 100. Je weiter das Distanzelement 24 umgekehrt aus dem ersten Halterteil 16 herausgeschraubt wird, desto größer wird der Abstand zwischen dem ersten Halterteil 16 und dem zweiten Halterteil 18 und dementsprechend größer wird die eingestellte Fräsbreite.

Das Fräswerkzeug 100 wird üblicherweise in einer dafür vorgesehenen Werkzeugaufnahme eingespannt. Hierzu weist das erste Halterteil 16 an seinem unteren Ende einen Anschlussflansch 26 auf. Dieser Anschlussflansch 26 dient gemeinsam mit einer Befestigungsschraube 28 und einer dazugehörigen Unterlegscheibe 30 der Befestigung bzw. Fixierung des Fräswerkzeugs 100 an der Werkzeugaufnahme.

Das erste Halterteil 16 hat insbesondere aufgrund des Anschlussflansches 26 eine im Wesentlichen längliche Form, welche im Querschnitt ganz grob einer T-Form entspricht. Das zweite Halterteil 18 ist dagegen im Wesentlichen scheibenförmig ausgestaltet. Es wird auf die Oberseite des ersten Halterteils 16 aufgelegt. Wie später noch näher im Detail erläutert wird, liegt das zweite Halterteil 18 jedoch in axialer Richtung nicht direkt auf dem ersten Halterteil 16, sondern auf dem Distanzelement 24 auf.

Beide Halterteile 16, 18 wie auch das gesamte Fräswerkzeug 100 sind vorzugsweise symmetrisch zu einer Längsachse 32. Die beiden Halterteile 16, 18 sind in montiertem Zustand ineinander verschachtelt. Man könnte auch sagen, sie greifen ähnlich wie Zahnräder ineinander. In Umfangsrichtung 34 betrachtet, also um die Längsachse 32 herum, ist zwischen jeweils zwei am ersten Halterteil 16 angeordneten Schneidplatten-Aufnahmen 13 jeweils eine Schneidplatten-Aufnahme 13 angeordnet, welche zu dem zweiten Halterteil 18 gehört. Umgekehrt ist auch zwischen jeweils zwei Schneidplatten-Aufnahmen 13 des zweiten Halterteils 18 jeweils eine Schneidplatten-Aufnahme 13 angeordnet, welche zu dem ersten Halterteil 16 gehört. So ist beispielsweise die dritte Schneidplatten-Aufnahme 13c in Umfangsrichtung zwischen der ersten Schneidplatten-Aufnahme 13a und der zweiten Schneidplatten-Aufnahme 13b angeordnet, wobei die dritte Schneidplatten-Aufnahme 13c zu dem zweiten Halterteil 18 gehört und die erste und zweite Schneidplatten-Aufnahme 13a, 13b zu dem ersten Halterteil 16 gehören. Gleichermaßen ist die zweite Schneidplatten-Aufnahme 13b, welche zu dem ersten Halterteil 16 gehört, zwischen der dritten Schneidplatten-Aufnahme 13c und der vierten Schneidplatten-Aufnahme 13d angeordnet, welche zu dem zweiten Halterteil 18 gehören. Drehmomentmitnahme-Flächen 36, welche am ersten Halterteil 16 angeordnet sind und mit entsprechenden Drehmomentmitnahme-Flächen 38 korrespondieren, die am zweiten Halterteil 18 angeordnet sind, sorgen für die Drehmomentübertragung von dem ersten Halterteil 16 auf das zweite Halterteil 18. Diese einander entsprechenden Drehmomentmitnahme-Flächen 36, 38 verlaufen vorzugsweise entlang einer Radialrichtung 40 des Werkzeugs 100, welche orthogonal zu der Längsachse 32 und orthogonal zu der Umfangsrichtung 34 ausgerichtet ist. Zumindest schließen die Drehmomentmitnahme-Flächen 36, 38 mit dieser Radialrichtung 40 einen Winkel < 5° ein. Gegenüber der Längsachse 32 verlaufen die Drehmomentmitnahme-Flächen 36, 38 entweder parallel oder sind zu dieser leicht geneigt.

Die am ersten Halterteil 16 angeordneten Schneidplatten 12 stehen gegenüber den am zweiten Halterteil 18 angeordneten Schneidplatten 12 in unterschiedlicher Richtung von dem Kopfteil des Fräswerkzeug-Halters 10 ab. Die erste und die zweite Schneidplatte 12a, 12b, welche an dem ersten Halterteil 16 angeordnet sind, stehen beispielsweise nach unten hin vom Kopfteil des Fräswerkzeug-Halters 10 ab, wohingegen die dritte und vierte Schneidplatte 12c, 12d, welche an dem zweiten Halterteil 18 angeordnet sind, nach oben hin von dem Kopfteil des Fräswerkzeug-Halters 10 abstehen. Mit "nach unten" und "nach oben" sind vorliegend zwei entgegengesetzt zueinander ausgerichtete Richtungen gemeint, welche parallel zu der Längsachse 32 sind. Für die am ersten Halterteil 16 angeordneten Schneidplatten 12 werden vorzugsweise leicht andere Schneidplatten verwendet als für das zweite Halterteil 18. Die an den beiden Halterteilen 16, 18 angeordneten Schneidplatten sind zwar von der Art her grundsätzlich die gleichen, allerdings sind diese spiegelverkehrt zueinander aufgebaut. In der Fachsprache spricht man diesbezüglich meist von linken und rechten Schneidplatten, welche im vorliegenden Fall in abwechselnder Reihenfolge am ersten und am zweiten Halterteil 16, 18 angeordnet sind. An dieser Stelle sei auch erwähnt, dass die Schneidplatten 12 im vorliegenden Fall tangential an den beiden Halterteilen 16, 18 angeordnet sind. Dies ist für die Ausführung der vorliegenden Erfindung jedoch nicht zwingend erforderlich. Die Schneidplatten 12 können genauso gut auch axial oder in anderer Ausrichtung am Fräswerkzeug-Halter 10 angeordnet sein, ohne den Rahmen der vorliegenden Erfindung zu verlassen.

Fig. 3 und 4 zeigen einen ersten Zustand des erfindungsgemäßen Fräswerkzeugs 100, in dem die Fräsbreite auf den geringsten Wert eingestellt ist, also der Abstand zwischen dem ersten und dem zweiten Halterteil 16, 18 kleinstmöglich ist, und in dem die beiden Halterteile 16, 18 mit Hilfe der Arretierung 20 bzw. der Spannschraube 22 festgestellt sind. Die Spannschraube 22 drückt dabei mit ihrem konisch geformten Kopf gegen eine entsprechend geformte, konische Fläche 42 des zweiten Halterteils 18. Hierdurch übt die Spannschraube 22 sowohl in axialer Richtung als auch in radialer Richtung Kraft auf das zweite Halterteil 18 aus. Das Distanzelement 24 wird von der Spannschraube 22 jedoch nicht kontaktiert. Die Spannschraube 22 ist, ohne das Distanzelement 24 zu berühren, durch das Distanzelement 24 hindurch in das erste Halterteil 16 eingeschraubt. Hierzu ist an der Unterseite der Spannschraube 22 ein Außengewinde 44 vorgesehen, welches mit einem im Inneren des ersten Halterteils 16 vorgesehenen Innengewinde 46 korrespondiert. Beide Gewinde 44, 46 sind vorzugsweise als Feingewinde ausgestaltet.

Auch das Distanzelement 24 ist in dem vorliegend gezeigten Ausführungsbeispiel in das erste Halterteil 16 eingeschraubt. Hierzu ist am unteren Ende des Distanzelements 24 ein Außengewinde 48 vorgesehen, welches mit einem im Inneren des ersten Halterteils 16 angeordneten Innengewinde 50 korrespondiert. Zur einfacheren Differenzierung werden die Gewinde 44-50 nachfolgend wie folgt bezeichnet: Das am Distanzelement 24 vorgesehene Außengewinde 48 wird als erstes Gewinde bezeichnet. Das im ersten Halterteil 16 vorgesehene Innengewinde 50 wird als zweites Gewinde bezeichnet. Das ebenfalls im ersten Halterteil 16 vorgesehene Innengewinde 46 wird als drittes Gewinde bezeichnet. Das an der Spannschraube 22 angeordnete Außengewinde 44 wird als viertes Gewinde bezeichnet. Bei allen Gewinden 44-50 handelt es sich vorzugsweise um Feingewinde. Die im ersten Halterteil 16 vorgesehenen Gewinde 46, 50 (zweites und drittes Gewinde) verlaufen vorzugsweise koaxial, sind jedoch entlang der Längsachse 32 zueinander versetzt.

In montiertem Zustand drückt die Spannschraube 22 unter anderem in axialer Richtung gegen das zweite Halterteil 18. Das zweite Halterteil 18 liegt in axialer Richtung auf dem Distanzelement 24 auf. Hierzu weisen Distanzelement 24 und zweites Halterteil 18 jeweils eine kreisringförmige Anlagefläche 52, 54 auf, entlang derer diese beiden Bauteile einander kontaktieren. Die kreisringförmigen Anlageflächen 52, 54 dienen als axiale Plananlage. Diese dient im Wesentlichen dazu, Taumelfehler zu minimieren.

Das Distanzelement 24 ist, wie bereits erwähnt, in das erste Halterteil 16 eingeschraubt. In dem in Fig. 4 gezeigten Zustand ist das Distanzelement 24 vollständig bis zu einem unteren Anschlag 56, welcher dafür im Inneren des ersten Halterteils 16 vorgesehen ist, eingeschraubt. Um die Toleranzen für den Rund- und Planlauf des Fräswerkzeugs 100 möglichst gering halten zu können, ist in radialer Richtung zwischen dem Distanzelement 24 und dem ersten Halterteil 16 wie auch zwischen dem Distanzelement 24 und dem zweiten Halterteil 18 jeweils eine als Zentrierung fungierende Spielpassung vorgesehen. Im ersten Halterteil 16 ist hierzu eine symmetrisch zur Längsachse 32 verlaufende Zylinderfläche 58 vorgesehen, welche vorliegend als erste Zylinderfläche bezeichnet wird. Diese erste Zylinderfläche 58 korrespondiert mit einer am Außenumfang des Distanzelements 24 vorgesehenen Zylinderfläche 60. In Fig. 4 weiter oben ist in ähnlicher Weise am zweiten Halterteil 18 eine symmetrisch zur Längsachse 32 verlaufende Zylinderfläche 62 vorgesehen. Diese Zylinderfläche 62 wird vorliegend als zweite Zylinderfläche bezeichnet. Sie korrespondiert mit einer am Außenumfang des oberen Endes des Distanzelements 24 vorgesehenen Zylinderfläche 64. Zwischen den Zylinderflächen 58, 60 wie auch zwischen den Zylinderflächen 62, 64 ist vorzugsweise eine Spielpassung vorgesehen. Die erste Zylinderfläche 58 verläuft vorzugsweise koaxial zu der zweiten Zylinderfläche 62, wobei die beiden Zylinderflächen 58, 62 in montiertem Zustand des Werkzeugs axial versetzt zueinander angeordnet sind.

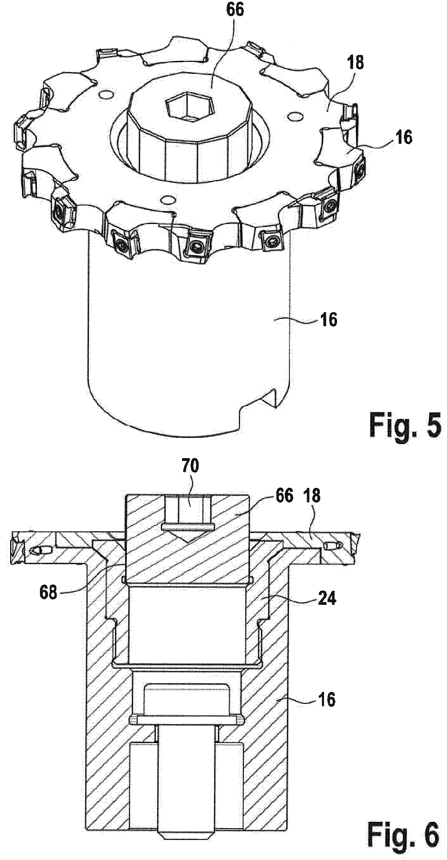

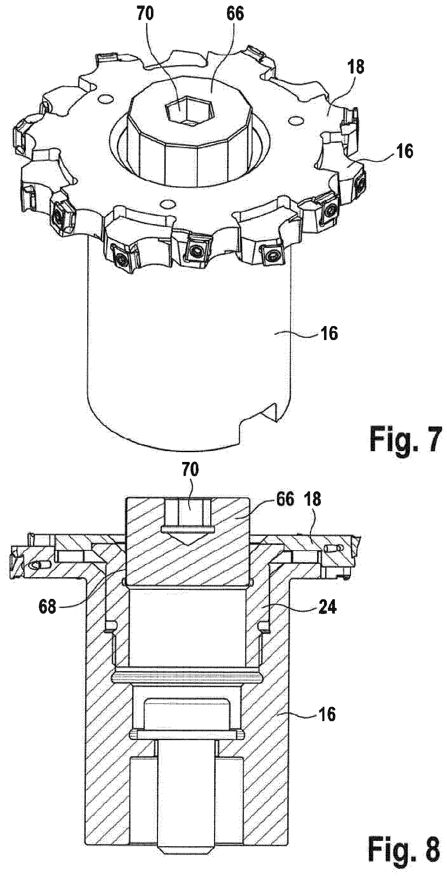

Um den Abstand zwischen den beiden Halterteilen 16, 18 und damit die Fräsbreite zu verändern, muss das Distanzelement 24 gegenüber dem ersten Halterteil 16 durch Verschrauben in eine andere Position gebracht werden. Dieser Vorgang ist beispielhaft in den Fig. 5-8 dargestellt. Hier wird ein Verstelladapter 66 zum Ein- bzw. Ausschrauben des Distanzelements 24 verwendet. Fig. 5 und 6 zeigen den Zustand, in dem das Distanzelement 24 (noch) vollständig in das erste Halterteil 16 eingeschraubt ist. Fig. 7 und 8 zeigen hingegen den Zustand, in dem das Distanzelement 24 bereits teilweise aus dem ersten Halterteil 16 ausgeschraubt ist, so dass die Fräsbreite bzw. der Abstand zwischen den beiden Halterteilen 16, 18 vergrößert ist.

Der Verstelladapter 66 greift in einen Werkzeugeingriff 68 ein, welcher im Bereich des oberen Endes auf der Innenseite des Distanzelements 24 angeordnet ist. Im vorliegenden Fall handelt es sich dabei um einen Vielkant-Werkzeugeingriff. Dieser Werkzeugeingriff 68 wird vorliegend als erster Werkzeugeingriff bezeichnet. Im Inneren des Verstelladapters 66 ist darüber hinaus ein zweiter Werkzeugeingriff 70 vorgesehen, mit Hilfe dessen sich der Verstelladapter 66 bewegen lässt. Dieser ist vorliegend als Inbus-Werkzeugeingriff ausgestaltet. Durch Einsetzen eines Inbus-Schlüssels in den zweiten Werkzeugeingriff 70 lässt sich der Verstelladapter 66 und damit auch das Distanzelement 24 somit sehr einfach bewegen. Es sei an dieser Stelle jedoch angemerkt, dass selbstverständlich auch andere Arten von Werkzeugeingriffen für die Werkzeugeingriffe 68, 70 verwendet werden können, ohne den Rahmen der vorliegenden Erfindung zu verlassen. Grundsätzlich ist es auch möglich, das Distanzelement 24 von Hand in das Halterteil 16 einzuschrauben bzw. aus diesem auszuschrauben.

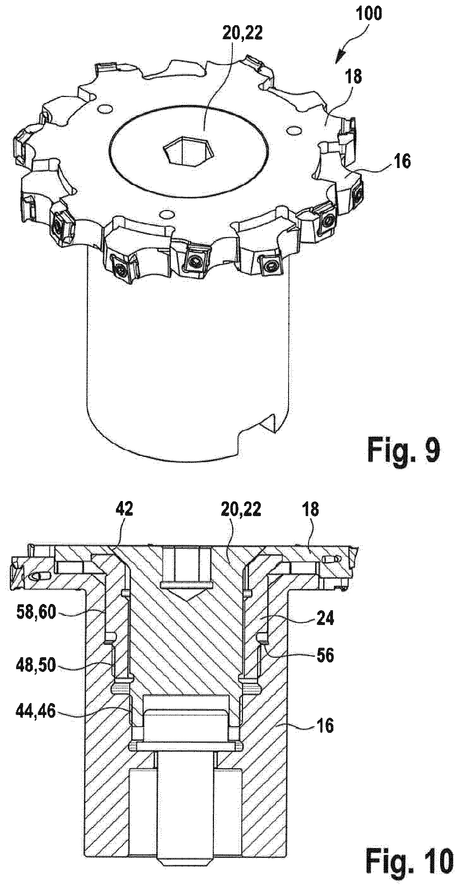

Sobald die gewünschte Fräsbreite bzw. der gewünschte Abstand zwischen den beiden Halterteilen 16, 18 eingestellt ist, können die beiden Halterteile 16, 18 wieder mit Hilfe der Arretierung 20 festgestellt werden. Dies ist in Fig. 9 und 10 gezeigt. Der in Fig. 9 und 10 gezeigte Zustand entspricht also wieder dem montierten Zustand, der auch in Fig. 3 und 4 gezeigt ist, wobei der Abstand zwischen den beiden Halterteilen 16, 18 im Vergleich dazu vergrößert ist.

Abschließend sei erwähnt, dass sich grundsätzlich auch eine andere Art der Arretierung anstelle der im vorliegend beispielhaft gezeigten Ausführungsbeispiel verwendeten Spannschraube 22 verwenden ließe. Beispielsweise ließe sich hierzu auch ein Klemmmechanismus verwenden.

## Patentansprüche

1. Fräswerkzeug-Halter (10), aufweisend:
- ein erstes Halterteil (16) mit einer ersten Schneidplatten-Aufnahme (13a) zur Aufnahme einer ersten Schneidplatte (12a) und mit einer zweiten Schneidplatten-Aufnahme (13b) zur Aufnahme einer zweiten Schneidplatte (12b);
- ein zweites Halterteil (18), welches, zur Einstellung einer Fräsbreite, gegenüber dem ersten Halterteil (16) entlang einer Längsachse (32) variabel positionierbar ist, wobei das zweite Halterteil (18) eine dritte Schneidplatten-Aufnahme (13c) zur Aufnahme einer dritten Schneidplatte (12c) sowie eine vierte Schneidplatten-Aufnahme (13d) zur Aufnahme einer vierten Schneidplatte (12d) aufweist;
- eine Arretierung (20) zum Feststellen des ersten und zweiten Halterteils (16, 18) auf die eingestellte Fräsbreite,
wobei das erste und das zweite Halterteil (16, 18) in montiertem Zustand derart zueinander positioniert sind, dass die dritte Schneidplatten-Aufnahme (13c) in Umfangsrichtung (34) zwischen der ersten Schneidplatten-Aufnahme (13a) und der zweiten Schneidplatten-Aufnahme (13b) angeordnet ist, und dass die zweite Schneidplatten-Aufnahme (13b) in Umfangsrichtung (34) zwischen der dritten Schneidplatten-Aufnahme (13c) und der vierten Schneidplatten-Aufnahme (13d) angeordnet ist,
wobei der Fräswerkzeug-Halter (10) ferner ein Distanzelement (24) aufweist, welches der Einstellung der Fräsbreite dient und zwischen dem ersten und dem zweiten Halterteil (16, 18) angeordnet ist,
**dadurch gekennzeichnet, dass** das erste Halterteil (16) zur Zentrierung des Distanzelementes (24) eine symmetrisch zur Längsachse (32) verlaufende erste Zylinderfläche (58) aufweist, und dass das zweite Halterteil (18) zur Zentrierung des Distanzelementes (24) eine symmetrisch zur Längsachse (32) verlaufende zweite Zylinderfläche (62) aufweist.

2. Fräswerkzeug-Halter nach Anspruch 1, wobei das Distanzelement (24) als eine Hülse ausgebildet ist.

3. Fräswerkzeug-Halter nach Anspruch 1 oder 2, wobei das Distanzelement (24) ein erstes Gewinde (48) aufweist, welches mit einem im ersten Halterteil (16) angeordneten zweiten Gewinde (50) korrespondiert, wobei das Zusammenspiel des ersten und des zweiten Gewindes (48, 50) der Einstellung der Fräsbreite dient.

4. Fräswerkzeug-Halter nach einem der Ansprüche 1-3, wobei das Distanzelement (24) das zweite Halterteil (18) entlang einer kreisringförmigen Anlagefläche (52, 54) kontaktiert.

5. Fräswerkzeug-Halter nach einem der Ansprüche 1-4, wobei die erste und die zweite Zylinderfläche (58, 62) entlang der Längsachse (32) versetzt zueinander sind und koaxial zueinander verlaufen.

6. Fräswerkzeug-Halter nach einem der Ansprüche 1-5, wobei die Arretierung (20) eine Spannschraube (22) aufweist, welche durch das Distanzelement (24) hindurch in ein drittes Gewinde (46), welches in dem ersten Halterteil (16) angeordnet ist, einschraubbar ist.

7. Fräswerkzeug-Halter nach Anspruch 6, wobei die Spannschraube (22) in eingeschraubtem Zustand das erste Halterteil (16) und das zweite Halterteil (18), nicht jedoch das Distanzelement (24) kontaktiert.

8. Fräswerkzeug-Halter nach Anspruch 6 oder 7, wobei die Spannschraube (22) das zweite Halterteil (18) entlang einer konischen Fläche (42) kontaktiert.

9. Werkzeugsatz, der einen Fräswerkzeug-Halter nach einem der Ansprüche 1-8 und einen Verstelladapter (66) zum Verstellen der Position des Distanzelements (24) aufweist, wobei das Distanzelement (24) ein zu dem Verstelladapter (66) passenden, ersten Werkzeugeingriff (68) aufweist, und wobei der Verstelladapter (66) ferner einen zweiten Werkzeugeingriff (70) aufweist.

10. Fräswerkzeug-Halter nach einem der Ansprüche 1-8, wobei das erste und das zweite Halterteil (16, 18) einander entlang mehrerer, miteinander korrespondierender Drehmomentmitnahme-Flächen (36, 38) kontaktieren, wobei die Drehmomentmitnahme-Flächen (36, 38) mit einer Radialrichtung (40), die orthogonal zu der Längsachse (32) und der Umfangsrichtung (34) verläuft, einen Winkel kleiner 5° einschließen.

11. Fräswerkzeug (100), aufweisend:
- feinen Fräswerkzeug-Halter (10) nach einem der Ansprüche 1-8 oder 10;
- eine erste Schneidplatte (12a), welche in der ersten Schneidplatten-Aufnahme (13a) angeordnet ist;
- eine zweite Schneidplatte (12b), welche in der zweiten Schneidplatten-Aufnahme (13b) angeordnet ist;
- eine dritte Schneidplatte (12c), welche in der dritten Schneidplatten-Aufnahme (13c) angeordnet ist; und
- eine vierte Schneidplatte (12d), welche in der vierten Schneidplatten-Aufnahme (13d) angeordnet ist.

12. Fräswerkzeug nach Anspruch 11, wobei die erste und die zweite Schneidplatte (12a, 12b) in einer ersten Richtung, welche parallel zu der Längsachse (32) ist, von dem ersten Halterteil (16) abstehen, und wobei die dritte und die vierte Schneidplatte (12c, 12d) in einer zweiten Richtung, welche entgegengesetzt zu der ersten Richtung ist, von dem zweiten Halterteil (18) abstehen.

## Claims

1. A milling tool holder (10), comprising:
- a first holder part (16) having a first cutting insert receptacle (13a) for receiving a first cutting insert (12a) and having a second cutting insert receptacle (13b) for receiving a second cutting insert (12b);
- a second holder part (18) which is variably positionable with respect to the first holder part (16) along a longitudinal axis (32) in order to adjust a milling width, wherein the second holder part (18) comprises a third cutting insert receptacle (13c) for receiving a third cutting insert (12c) and a fourth cutting insert receptacle (13d) for receiving a fourth cutting insert (12d);
- a locking mechanism (20) for fixing the first and second holder parts (16, 18) to the adjusted milling width,
wherein the first and the second holder parts (16, 18) are positioned with respect to one another in the mounted state in such a manner that the third cutting insert receptacle (13c) is arranged in the circumferential direction (34) between the first cutting insert receptacle (13a) and the second cutting insert receptacle (13b), and in that the second cutting insert receptacle (13b) is arranged in the circumferential direction (34) between the third cutting insert receptacle (13c) and the fourth cutting insert receptacle (13d),
wherein the milling tool holder (10) further comprises a spacer element (24) which serves for adjusting the milling width and is arranged between the first and the second holder parts (16, 18),
**characterized in that** the first holder part (16) comprises a first cylinder surface (58) for centering the spacer element (24), wherein the first cylinder surface (58) extends symmetrically to the longitudinal axis (32), and that the second holder part (18) comprises a second cylinder surface (62) for centering the spacer element (24), wherein the second cylinder surface (62) extends symmetrically to the longitudinal axis (32).

2. The milling tool holder as claimed in claim 1, wherein the spacer element (24) is configured as a sleeve.

3. The milling tool holder as claimed in claim 1 or 2, wherein the spacer element (24) comprises a first thread (48) which corresponds with a second thread (50) arranged in the first holder part (16), wherein the interaction between the first and the second threads (48, 50) serves for adjusting the milling width.

4. The milling tool holder as claimed in one of claims 1-3, wherein the spacer element (24) contacts the second holder part (18) along an annular contact surface (52, 54).

5. The milling tool holder as claimed in one of claims 1-4, wherein the first cylinder surface (58) and the second cylinder surface (62) are offset with respect to one another along the longitudinal axis (32) and extend coaxially with respect to one another.

6. The milling tool holder as claimed in one of claims 1-5, wherein the locking mechanism (20) comprises a clamping screw (22) which is screwable through the spacer element (24) into a third thread (46) which is arranged in the first holder part (16).

7. The milling tool holder as claimed in claim 6, wherein, in a screwed-in state, the clamping screw (22) contacts the first holder part (16) and the second holder part (18) but not the spacer element (24).

8. The milling tool holder as claimed in claim 6 or 7, wherein the clamping screw (22) contacts the second holder part (18) along a conical surface (42).

9. A tool kit comprising a milling tool holder as claimed in one of claims 1-8 and an adjustment adapter (66) for adjusting the position of the spacer element (24), wherein the spacer element (24) comprises a first tool engagement (68) which matches the adjustment adapter (66), and wherein the adjustment adapter (66) additionally comprises a second tool engagement (70).

10. The milling tool holder as claimed in one of claims 1-8, wherein the first and the second holder parts (16, 18) contact one another along multiple torque driving faces (36, 38) which correspond with one another, wherein the torque driving faces (36, 38) enclose an angle of less than 5° with a radial direction (40) which extends orthogonally with respect to the longitudinal axis (32) and to the circumferential direction (34).

11. A milling tool (100), comprising
- a milling tool holder (10) as claimed in one of claims 1-8 or 10;
- a first cutting insert (12a) which is arranged in the first cutting insert receptacle (13a);
- a second cutting insert (12b) which is arranged in the second cutting insert receptacle (13b);
- a third cutting insert (12c) which is arranged in the third cutting insert receptacle (13c);
- a fourth cutting insert (12d) which is arranged in the fourth cutting insert receptacle (13d).

12. The milling tool as claimed in claim 11, wherein the first and the second cutting inserts (12a, 12b) protrude from the first holder part (16) in a first direction which is parallel to the longitudinal axis (32), and wherein the third and the fourth cutting inserts (12c, 12) protrude from the second holder part (18) in a second direction which is in the opposite direction to the first direction.

## Revendications

1. Support d'outil de fraisage (10), présentant :
- une première partie de support (16) avec un premier logement de plaquette de coupe (13a) pour recevoir une première plaquette de coupe (12a) et avec un deuxième logement de plaquette de coupe (13b) pour recevoir une deuxième plaquette de coupe (12b) ;
- une deuxième partie de support (18) qui peut être positionnée de manière variable le long d'un axe longitudinal (32) par rapport à la première partie de support (16) pour régler une largeur de fraisage, la deuxième partie de support (18) présentant un troisième logement de plaquette de coupe (13c) pour recevoir une troisième plaquette de coupe (12c) ainsi qu'un quatrième logement de plaquette de coupe (13d) pour recevoir une quatrième plaquette de coupe (12d) ;
- un blocage (20) pour immobiliser la première et la deuxième partie de support (16, 18) à la largeur de fraisage réglée,
la première et la deuxième partie de support (16, 18) étant positionnées l'une par rapport à l'autre à l'état monté de telle sorte que le troisième logement de plaquette de coupe (13c) est agencé dans la direction circonférentielle (34) entre le premier logement de plaquette de coupe (13a) et le deuxième logement de plaquette de coupe (13b), et que le deuxième logement de plaquette de coupe (13b) est agencé dans la direction circonférentielle (34) entre le troisième logement de plaquette de coupe (13c) et le quatrième logement de plaquette de coupe (13d),
le support d'outil de fraisage (10) présentant en outre un élément d'écartement (24) qui sert à régler la largeur de fraisage et qui est agencé entre la première et la deuxième partie de support (16, 18),
**caractérisé en ce que** la première partie de support (16) présente une première surface cylindrique (58) s'étendant de manière symétrique par rapport à l'axe longitudinal (32) pour centrer l'élément d'écartement (24), et la deuxième partie de support (18) présente une deuxième surface cylindrique (62) s'étendant de manière symétrique par rapport à l'axe longitudinal (32) pour centrer l'élément d'écartement (24).

2. Support d'outil de fraisage selon la revendication 1, l'élément d'écartement (24) étant configuré sous la forme d'un manchon.

3. Support d'outil de fraisage selon la revendication 1 ou 2, l'élément d'écartement (24) présentant un premier filetage (48) qui correspond à un deuxième filetage (50) agencé dans la première partie de support (16), l'interaction du premier et du deuxième filetage (48, 50) servant à régler la largeur de fraisage.

4. Support d'outil de fraisage selon l'une quelconque des revendications 1 à 3, l'élément d'écartement (24) étant en contact avec la deuxième partie de support (18) le long d'une surface d'appui en forme d'anneau de cercle (52, 54).

5. Support d'outil de fraisage selon l'une quelconque des revendications 1 à 4, la première et la deuxième surface cylindrique (58, 62) étant décalées l'une par rapport à l'autre le long de l'axe longitudinal (32) et s'étendant de manière coaxiale l'une par rapport à l'autre.

6. Support d'outil de fraisage selon l'une quelconque des revendications 1 à 5, le blocage (20) présentant une vis de serrage (22) qui peut être vissée à travers l'élément d'écartement (24) dans un troisième filetage (46) qui est agencé dans la première partie de support (16).

7. Support d'outil de fraisage selon la revendication 6, la vis de serrage (22), lorsqu'elle est vissée, étant en contact avec la première partie de support (16) et la deuxième partie de support (18), mais pas avec l'élément d'écartement (24).

8. Support d'outil de fraisage selon la revendication 6 ou 7, la vis de serrage (22) étant en contact avec la deuxième partie de support (18) le long d'une surface conique (42).

9. Jeu d'outils, qui présente un support d'outil de fraisage selon l'une quelconque des revendications 1 à 8 et un adaptateur de réglage (66) pour régler la position de l'élément d'écartement (24), l'élément d'écartement (24) présentant une première prise d'outil (68) assortie à l'adaptateur de réglage (66), et l'adaptateur de réglage (66) présentant en outre une deuxième prise d'outil (70).

10. Support d'outil de fraisage selon l'une quelconque des revendications 1 à 8, la première et la deuxième partie de support (16, 18) étant en contact l'une avec l'autre le long de plusieurs surfaces d'entraînement de couple (36, 38) qui se correspondent, les surfaces d'entraînement de couple (36, 38) formant un angle inférieur à 5° avec une direction radiale (40) qui s'étend de manière orthogonale par rapport à l'axe longitudinal (32) et à la direction circonférentielle (34).

11. Outil de fraisage (100), présentant :
- un support d'outil de fraisage (10) selon l'une quelconque des revendications 1 à 8 ou 10 ;
- une première plaquette de coupe (12a), qui est agencée dans le premier logement de plaquette de coupe (13a) ;
- une deuxième plaquette de coupe (12b), qui est agencée dans le deuxième logement de plaquette de coupe (13b) ;
- une troisième plaquette de coupe (12c), qui est agencée dans le troisième logement de plaquette de coupe (13c) ; et
- une quatrième plaquette de coupe (12d), qui est agencée dans le quatrième logement de plaquette de coupe (13d).

12. Outil de fraisage selon la revendication 11, la première et la deuxième plaquette de coupe (12a, 12b) faisant saillie dans une première direction, qui est parallèle à l'axe longitudinal (32), à partir de la première partie de support (16), et la troisième et la quatrième plaquette de coupe (12c, 12d) faisant saillie dans une deuxième direction, qui est opposée à la première direction, à partir de la deuxième partie de support (18).
